# EUROPÄISCHE PATENTSCHRIFT

(11) **EP 1 940 640 B1**
(45) Veröffentlichungstag und Bekanntmachung des Hinweises auf die Patenterteilung: **23.12.2015**
(21) Anmeldenummer: 06818031.4
(22) Anmeldetag: 27.10.2006
(51) Int. Cl.: B60J 7/185, B60J 7/20

(54) **VERRIEGELUNGSVORRICHTUNG EINES VERDECKKASTENDECKELS EINES CABRIOLETS**
LOCKING MECHANISM FOR A FOLDING TOP COMPARTMENT COVER OF A CONVERTIBLE
DISPOSITIF DE VERROUILLAGE D'UN COUVERCLE DE LOGEMENT DE CAPOTE D'UN CABRIOLET

(30) Priorität: 28.10.2005 DE 102005052063
(43) Veröffentlichungstag der Anmeldung: 09.07.2008
(73) Patentinhaber: Webasto SE, 82131 Stockdorf (DE)
(72) Erfinder: BIECKER, Peter, 82041 Oberhaching (DE); MIKLOSI, Stefan, 81247 München (DE)
(74) Vertreter: Konnerth, Dieter Hans
(86) Internationale Anmeldenummer: PCT/DE2006/001906
(87) Internationale Veröffentlichungsnummer: WO 2007/048402

(56) Entgegenhaltungen:
- EP-A2- 1 084 885
- WO-A-03/080377
- DE-A1- 10 107 079
- DE-C1- 4 445 944
- DE-C1- 19 756 062
- GB-A- 2 300 671

## Beschreibung

Die Erfindung betrifft eine Verriegelungsvorrichtung zum Festlegen einer an der Karosserie mittels einer Antriebseinrichtung bewegbar gelagerten Trägereinrichtung eines Verdeckkastendeckels eines Cabriolets.

Aus der DE 101 07 079 A1 ist ein Cabriolet bekannt geworden, das in seinem Heckbereich eine Trägereinrichtung aufweist, an der vorderseitig ein Verdeckkastendeckel fest angebracht ist und rückseitig eine Heckklappe mittels einer Lagereinrichtung bewegbar gelagert ist. Die Trägereinrichtung ist mittels einer Viergelenkeinrichtung an der Karosserie zwischen einer Schließstellung und einer nach hinten geschwenkten Offenstellung verstellbar und mittels einer Schloßeinrichtung in ihrer Schließstellung an der Karosserie verriegelbar. Die Schloßeinrichtung enthält beidseits jeweils zwei in Längsrichtung voneinander beabstandete Schlösser, die an der Trägereinrichtung angeordnet sind und mit einem an der Trägereinrichtung angeordneten gemeinsamen Antrieb verbunden sind. Gemäß einer alternativen Gestaltung ist das vordere Schloß an der Karosserie und das hintere Schloß an der Trägereinrichtung angeordnet und jedem Schloß ist ein eigener Antrieb zugeordnet. Die Heckklappe ist mittels eines Heckklappenschlosses verriegelbar, das im Bereich der Lagereinrichtung der Heckklappe angeordnet ist.

DE 197 56 062 C1 beschreibt einen ähnlichen Heckdeckel eines Cabriolets, wobei das Verriegelungsteil am Mehrgelenk des Heckdeckels vorgesehen ist.

Aus der DE 44 45 944 C1 ist ein Fahrzeug mit einem unwandelbaren und in einen Verdeckkasten ablegbaren Verdeck bekannt geworden. Ein gleichzeitig eine Heckklappe oder einen Kofferraumdeckel bildender Verdeckkastendeckel ist mittels einer Gelenkeinrichtung an einem Hilfsrahmen bewegbar gelagert, der in einem unteren Fahrzeugendbereich über eine fahrzeugfeste Schwenkachse bewegbar abgestützt ist. Der Verdeckkastendeckel kann gemeinsam mit dem Hilfsrahmen um die fahrzeugfeste Schwenkachse nach hinten verschwenkt werden, so dass eine Öffnung für das abzulegende Verdeck frei ist. In seiner Funktion als Kofferraumklappe ist der Verdeckkastendeckel um eine vordere Schwenkachse schwenkbar.

Der Erfindung liegt die Aufgabe zugrunde, eine eingangs genannte Verriegelungsvorrichtung im Hinblick auf eine verbesserte Funktionalität und vereinfachte Betätigung zu verbessern.

Die Aufgabe wird bei der eingangs genannten Verriegelungsvorrichtung erfindungsgemäß gelöst durch eine karosserieseitig gelagerte erste Schloßeinheit zum lösbaren Verriegeln der Trägereinrichtung an der Karosserie, eine an der Trägereinrichtung gelagerte zweite Schloßeinheit zum lösbaren Verriegeln des an der Trägereinrichtung bewegbar gelagerten Verdeckkastendeckels an der Trägereinrichtung und eine Betätigungseinrichtung für die Betätigung der beiden Schloßeinheiten. Damit kann die Betätigung der für die Trägereinrichtung wie auch für den Verdeckkastendeckel vorgesehenen beiden Schloßeinheiten mittels eines einzigen bzw. gemeinsamen Antriebs in kostengünstiger und betriebssicherer Weise vorgenommen werden.

Die Trägereinrichtung mit dem Verdeckkastendeckel, der auch eine Heckklappe oder einen Kofferraumdeckel bilden kann, ist für Cabriolets mit einem umwandelbaren Hardtop- oder Softtopdach vorgesehen, kann jedoch auch bei anderen Fahrzeugen eingesetzt werden.

Vorteilhafte Ausgestaltungen der Erfindung sind in den Unteransprüchen angegeben.

Besonders bevorzugt ist eine Gestaltung, wonach die Betätigungseinrichtung mit der die Trägereinrichtung verstellenden Antriebseinrichtung verbunden ist. Aufgrund der von der Antriebseinrichtung abgeleiteten Betätigung ist somit ein eigenständiger Antrieb oder Antriebsmotor nicht erforderlich. Zweckmäßigerweise sind die beiden Schloßeinheiten zueinander benachbart angeordnet, so dass sie ohne großen Aufwand durch die gemeinsame Betätigungseinrichtung zu betätigen sind.

Für die gemeinsame Betätigung kann vorgesehen sein, dass die erste Schloßeinheit und die zweite Schloßeinheit in einem lösbaren Koppeleingriff miteinander verbunden sind, wenn die Betätigung erfolgt. Durch den lösbaren Koppeleingriff können die beiden Schloßeinheiten bzw. die die Schloßeinheiten lagernden Bauteile im Verlauf der Dachablage voneinander entfernt werden, wenn sie die erforderlichen Bewegungen ausführen.

Zweckmäßigerweise sind ein Riegelhaken der ersten Schloßeinheit und ein Schloßhaken der zweiten Schloßeinheit über Eingriffselemente miteinander koppelbar, um die gemeinsame Betätigung zu realisieren. Insbesondere bilden ein Betätigungsstift und eine den Betätigungsstift aufnehmende Schlitzführung die Eingriffselemente, jedoch können auch andersartige Eingriffselemente verwendet werden. Der Riegelhaken und der Schloßhaken können schwenkbar oder auch verschiebbar gelagert sein.

Die Verriegelungsvorrichtung ist vorzugsweise derart gebildet, dass die Trägereinrichtung in einer Schließstellung mittels der ersten Schloßeinheit an der Karosserie verriegelt gehalten ist, wobei die zweite Schloßeinheit den Verdeckkastendeckel von der Trägereinrichtung entriegelt hat.

Vorzugsweise ist die insbesondere als Bowdenzug gebildete Betätigungseinrichtung mit einem Riegelhaken der ersten Schloßeinheit verbunden. Die erste Schloßeinheit bzw. deren Riegelhaken ist dann über die Koppeleinrichtung bzw. die Eingriffselemente mit der zweiten Schloßeinheit bzw. deren Schloßhaken koppelbar.

Bevorzugt ist ein bzw. der Schloßhaken der zweiten Schloßeinheit mittels einer Vorspanneinrichtung in seine Schließstellung vorgespannt, in der er den Verdeckkastendeckel oder ein Lagerteil des Verdeckkastendeckels an der Trägereinrichtung verriegelt hält. Diese Schließstellung behält der Schloßhaken somit bei, auch wenn er von der ersten Schloßeinheit entkoppelt ist.

Bevorzugt ist der Verdeckkastendeckel mittels einer Halterung an einer Konsole angebracht, die mittels einer Lenkereinrichtung an der Trägereinrichtung bewegbar gelagert ist.

Eine zweckmäßige Gestaltung sieht vor, dass die Antriebseinrichtung an ihrem mit der Betätigungseinrichtung gekoppelten Ende entlang einer Führung verschiebbar geführt und mittels einer Sperreinrichtung in einer Endstellung verriegelbar ist, in der die erste Schloßeinheit entriegelt ist. Hierdurch wird ein definierter Bewegungsablauf beim Verschwenken der Trägereinrichtung und des Verdeckkastendeckels unter Berücksichtigung des auf die Antriebseinrichtung zurückwirkenden Gewichts dieser Bauteile erzielt. Vorzugsweise ist die Sperreinrichtung von einem von der Antriebseinrichtung bewegbaren Hebel zum Antreiben der Trägereinrichtung betätigbar.

Nachfolgend wird eine erfindungsgemäße Verriegelungsvorrichtung anhand eines Ausführungsbeispiels unter Bezugnahme auf die Zeichnung näher erläutert. Es zeigt:
- Fig. 1: in einer perspektivischen Draufsicht eine rechtsseitige Trägereinrichtung eines Verdeckkastendeckels eines Cabriolets, die in Schließstellung angeordnet ist und mittels einer Verriegelungsvorrichtung an der Karosserie verriegelt ist;
- Fig. 2: in einer perspektivischen Draufsicht in vergrößerter Teildarstellung die Trägereinrichtung der Fig. 1;
- Fig. 3: in einer Ansicht gemäß Fig. 2 die von der Karosserie entriegelte Trägereinrichtung;
- Fig. 4: in einer Ansicht gemäß Fig. 2 die von der Karosserie entriegelte und angehobene Trägereinrichtung;
- Fig. 5: in einer Ansicht gemäß Fig. 2 die an der Karosserie verriegelte Trägereinrichtung mit dem entriegelten und hochgeschwenkten Verdeckkastendeckel;
- Fig. 6: in einer Seitenansicht den Vorderabschnitt der an der Karosserie verriegelten Trägereinrichtung und die entriegelte Halterung des Verdeckkastendeckels;
- Fig. 7: in einer Seitenansicht gemäß Fig. 6 den Vorderabschnitt der von der Karosserie entriegelten Trägereinrichtung und die verriegelte Halterung des Verdeckkastendeckels;
- Fig. 8: in einer Seitenansicht gemäß Fig. 6 die Verriegelungsvorrichtung in einer Umschaltstellung;
- Fig. 9: in einer Seitenansicht gemäß Fig. 6 die Verriegelungsvorrichtung in einer Riegelstellung der Trägerreinrichtung bei geöffnetem Verdeckkastendeckels;
- Fig. 10: in einer perspektivischen Draufsicht in vergrößerter Teildarstellung die Antriebseinrichtung der Trägereinrichtung und der Verriegelungsvorrichtung in einer Stellung gemäß Fig. 1;
- Fig. 11: in einer perspektivischen Draufsicht in vergrößerter Teildarstellung die Antriebseinrichtung der Trägereinrichtung und der Verriegelungsvorrichtung in einer Stellung gemäß den Fig. 3 und 7; und
- Fig. 12: in einer perspektivischen Draufsicht in vergrößerter Teildarstellung die Antriebseinrichtung in einer Riegelstellung bei hochgeschwenkter Trägereinrichtung.

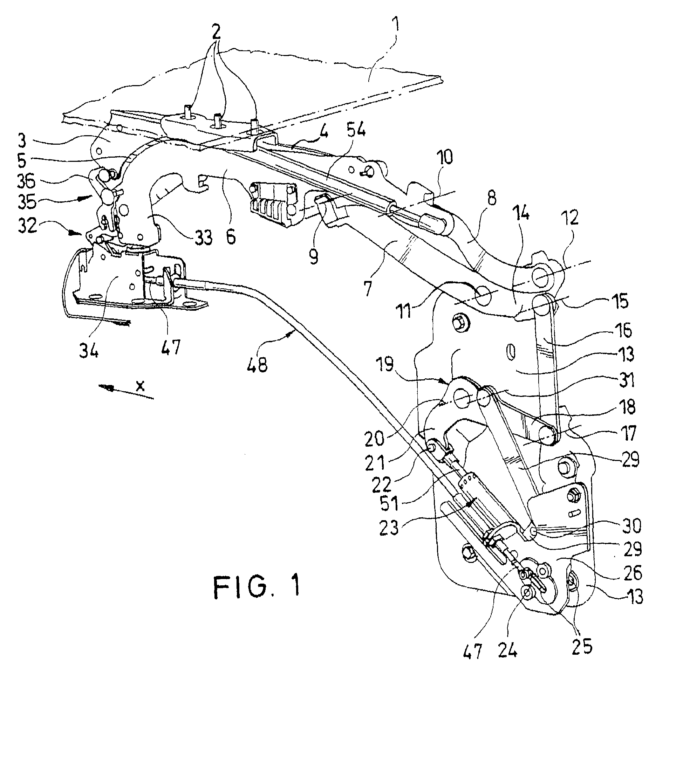

Ein Cabriolet weist einen Verdeckkastendeckel 1 auf (der Verdeckkastendeckel 1 ist nur in Fig. 1 ausschnittsweise und schematisch dargestellt), der zum Abdecken eines heckseitigen Verdeckablageraums vorgesehen ist und mit seinem Vorderrand (der in Fig. 1 mit x bezeichnete Pfeil zeigt in Fahrzeuglängsrichtung nach vorne) angehoben wird, um eine Durchtrittsöffnung für das zwischen seiner Schließstellung und seiner Ablagestellung zu verstellende Klappdach oder Faltverdeck, das ein Hardtop-Dach wie auch ein Softtop-Dach sein kann, freizugeben. Der Verdeckkastendeckel 1 dient zweckmäßigerweise auch als Kofferraumdeckel, indem er aus seiner Schließposition (Fig. 1) mit seinem Hinterrand relativ zur Karosserie hochgeschwenkt wird und damit eine Beladeöffnung des Kofferraums freigibt. In der DE 44 45 944 C1 ist ein vergleichbarer Verdeckkastendeckel offenbart, der über einen Hilfsrahmen an der Karosserie abgestützt ist und gemäß dem Ausführungsbeispiel am Fahrzeugheck um eine karosseriefeste Schwenkachse verschwenkbar gelagert ist.

Der Verdeckkastendeckel 1 ist beidseitig mittels einer jeweiligen Halterung, die z. B. mehrere Schraubenbolzen 2 enthält, an einer Konsole 3 befestigt, die wiederum über ein von zwei Lenkern 4 und 5 gebildetes Viergelenk an einer Trägereinrichtung schwenkbar gelagert, die z. B. von einem Rahmen 6 gebildet ist, der die Konsole 3 bzw. das Viergelenk 4, 5 lagert. Die Beschreibung erfolgt anhand der rechten Seite der im wesentlichen symmetrisch zur Fahrzeuglängsachse gebauten Trägereinrichtung des Verdeckkastendeckels mit der jeweiligen Antriebseinrichtung und Verriegelungsvorrichtung.

Der linksseitige und der rechtsseitige Rahmen 6 können miteinander z.B. mittels einer Querstange oder dergleichen fest verbunden sein, um die Stabilität der Trägereinrichtung zu erhöhen.

Die Trägereinrichtung bzw. der Rahmen 6 des Verdeckkastendeckels 1 ist beidseits an der Karosserie jeweils mittels eines Hauptlenkers 7 und eines Hilfslenkers 8, die ein Viergelenk mit den Gelenken 9 bzw. 10 am Rahmen 6 und den Gelenken 11 bzw. 12 an einer karosseriefesten Lagerplatte 13 bilden, schwenkbar gelagert.

Der Hauptlenker 7 weist eine sich über das eine Schwenk- oder Lagerachse bildende Gelenk 11 hinaus erstreckende Verlängerung 14 auf, an der endseitig in einem Gelenk 15 eine Verbindungsstange 16 angelenkt ist, die andererseits in einem Gelenk 17 an einem Arm 18 eines zweiarmigen Schwenkhebels 19 angelenkt ist, der um eine Schwenkachse 20 an der Lagerplatte 13 schwenkbar gelagert ist. Am zweiten Arm 21 des zweiarmigen Schwenkhebels 19 greift in einem Anlenkpunkt 22 eine Antriebseinheit an, die z. B. von einer hydraulischen Kolben-Zylinder-Einheit 23 gebildet ist.

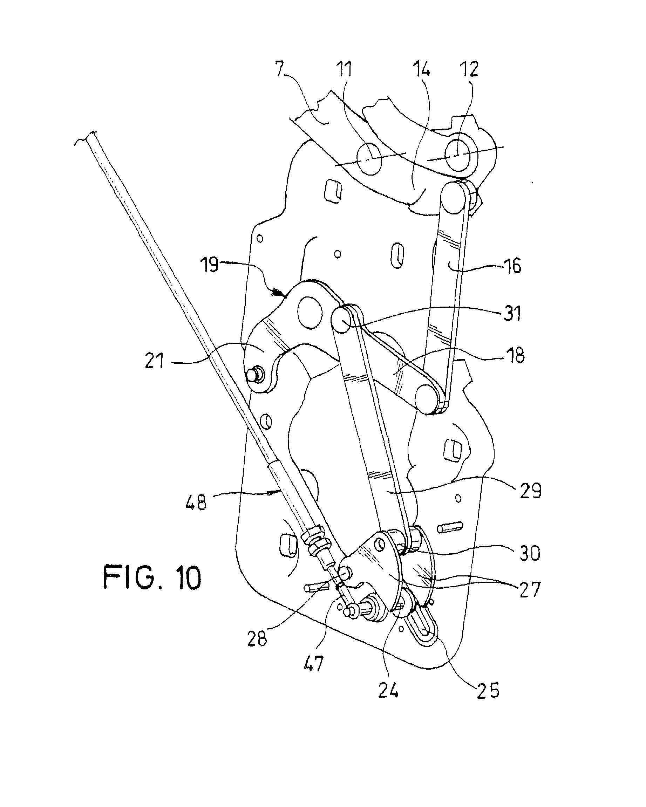

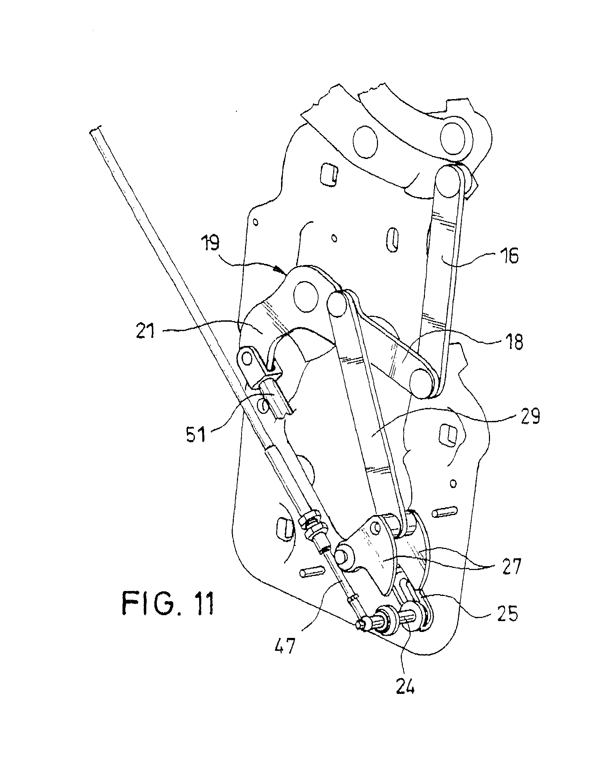

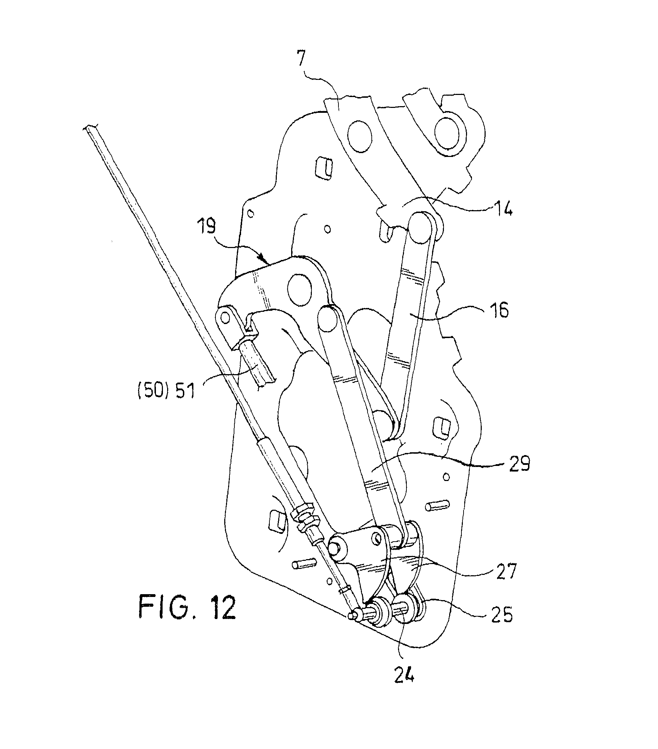

Die Kolben-Zylinder-Einheit 23 ist andererseits über einen Lagerstift 24 an zwei Langlochführungen 25 verschiebbar gelagert, die in der Lagerplatte 13 bzw. einer daran parallel angebrachten Stützplatte 26 angeordnet sind. Eine doppelte Drehfalle 27 (siehe Fig. 10 bis 12) ist zwischen der Lagerplatte 13 und der Stützplatte 26 um eine Achse 28 schwenkbar gelagert. Ein Steuerlenker 29 ist an der Drehfalle 27 in einem Gelenk 30 und am Arm 18 des Schwenkhebels 19 in einem Gelenk 31 angelenkt und verschwenkt in Abhängigkeit von der Stellung des Schwenkhebels 19 die Drehfalle 27 in eine Sperrstellung an dem Lagerstift 24 (Fig. 12), in der dieser in einer unteren Endstellung an den Langlochführungen 25 gehalten ist, und in eine Freigabestellung (Fig. 10 und 11), in der der Lagerstift 24 entlang der Langlochführungen 25 verschiebbar ist.

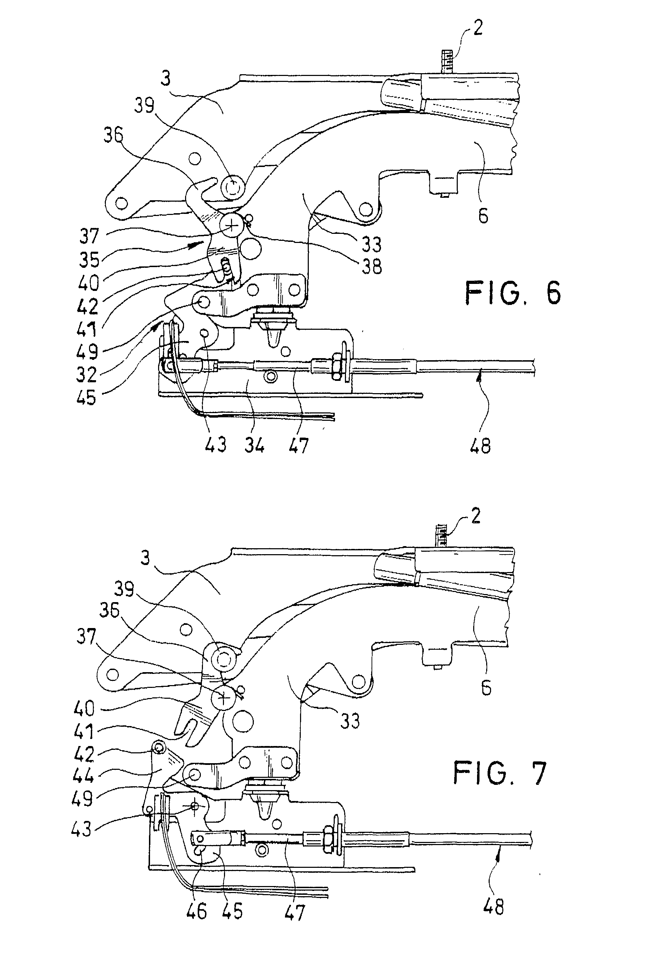

Eine Riegeleinrichtung für den Verdeckkastendeckel 1 enthält eine erste Schloßeinheit 32 (siehe auch Fig. 6 bis 9) zum lösbaren Festlegen des sich abwärts erstreckenden Vorderendes 33 des Rahmens 6 an einer karosseriefesten Lagereinheit 34 und eine zweite Schloßeinheit 35 zum lösbaren Festlegen des Verdeckkastendeckels 1 bzw. der Konsole 3 am Vorderende 33 des Rahmens 6.

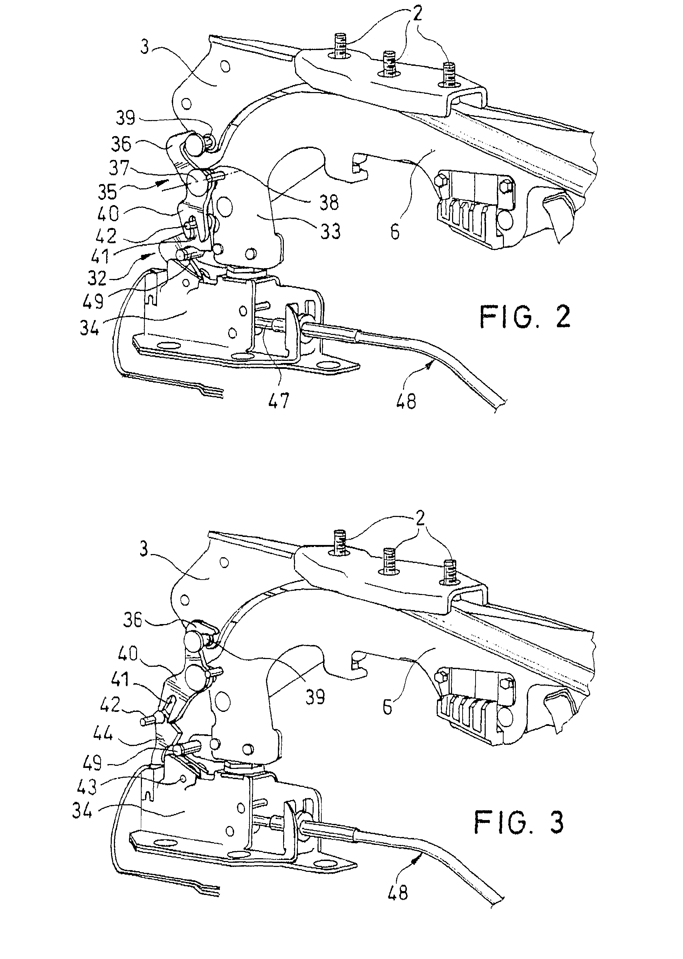

Die zweite Schloßeinheit 35 enthält einen Schloßhaken 36, der am Vorderende 33 des Rahmens 6 um eine Querachse 37 schwenkbar gelagert und mittels einer Drehfeder 38 in eine Schließstellung vorgespannt ist (Fig. 3 und 4 sowie 7 und 8), in der er einen Zapfen 39 umgreift, der an der Konsole 3 der Lagerung des Verdeckkastendeckels 1 angebracht ist. Der Schloßhaken 36 enthält einen sich zur Schwenkachse 37 gegenüberliegend erstreckenden Betätigungsarm 40 mit einer Schlitzführung 41, in der ein Betätigungsstift 42 zum Verschwenken des Schloßhakens 36 aufgenommen werden kann.

Die erste Schloßeinheit 32 weist einen an der karosseriefesten Lagereinheit 34 um eine Achse 43 schwenkbar gelagerten Riegelhaken 44 auf, an dem der Betätigungsstift 42 zum Betätigen der zweiten Schloßeinheit 35 angebracht ist und an dessen sich zur Schwenkachse 43 gegenüberliegend erstreckenden Betätigungsarm 45 in einem Langloch 46 ein Kabel 47 eines Bowdenzugs 48 befestigt ist, dessen anderes Ende an dem Lagerstift 24 der Kolben-Zylinder-Einheit 23 angebracht ist. Der geschlossene Riegelhaken 44 hintergreift einen Riegelzapfen 49, der am Vorderende 33 des Rahmens 6 in etwa unterhalb der Schwenkachse 37 des Schloßhakens 36 der zweiten Schloßeinheit 35 angebracht ist.

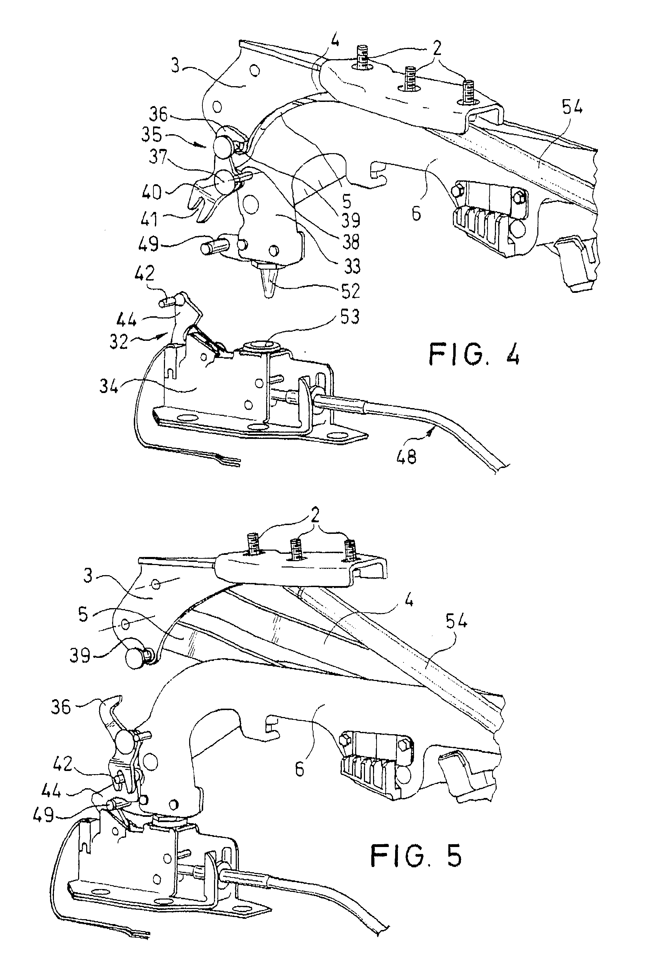

In der in den Fig. 1, 2 und 6 dargestellten Schließstellung des Verdeckkastendeckels 1 und des Rahmens 6 ist die erste Schloßeinheit 32 in ihrer Riegelstellung angeordnet, in der der Riegelhaken 44 den Riegelzapfen 49 des Rahmens 6 verriegelt hält und über seinen Betätigungsstift 42, der in der Schlitzführung 41 des Schloßhakens 36 im Eingriff ist, den Schloßhaken 36 in seiner Offenstellung gegen die Kraft der Drehfeder 38 verschwenkt hält, so dass die Konsole 3 bewegbar ist und der Verdeckkastendeckel 1 im Sinne einer Kofferraumklappe mit seinem Hinterrand manuell aufgeschwenkt werden kann, wobei das Viergelenk mit den Lenkern 4 und 5 verschwenkt wird (siehe Fig. 5) und dabei die Konsole 3 angehoben wird.

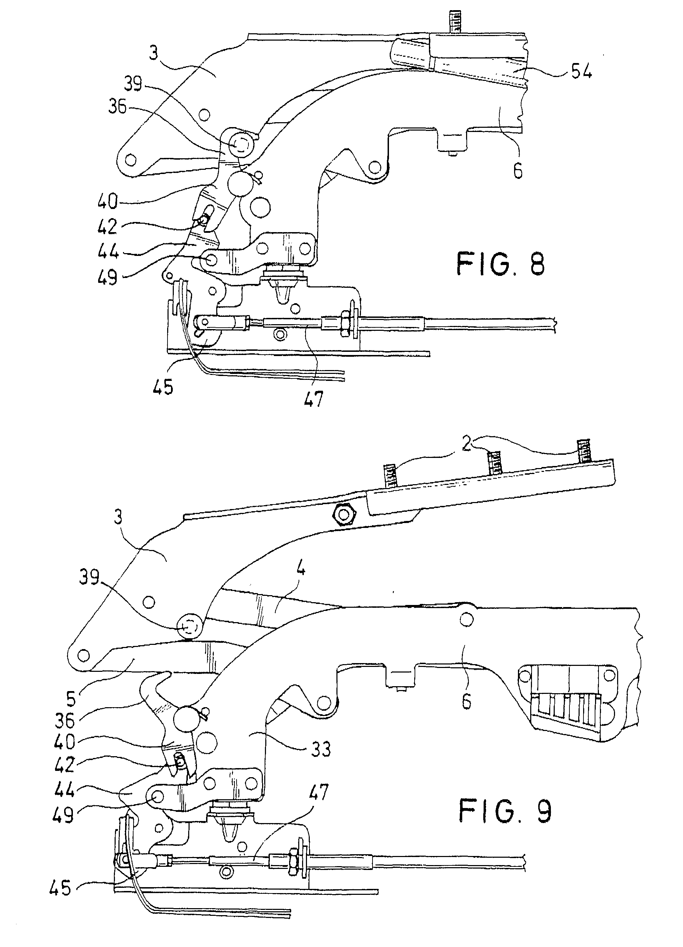

Wenn das Dach geöffnet und in den Verdeckkasten abgelegt werden soll, wird zuvor der Verdeckkastendeckel 1 angehoben, so dass der Bewegungsweg zum Ablegen des Daches (wie auch zum Ausfahren beim Schließen des Daches) freigelegt wird. Dazu wird die Kolben-Zylinder-Einheit 23 betätigt, die bei ihrer anfänglichen Expansionsbewegung aus der in Fig. 1 dargestellten Stellung (in den Fig. 10 bis 12 ist die Kolben-Zylinder-Einheit 23 nicht gezeigt) zunächst ihr unteres Ende und damit den Lagerstift 24 an der Langlochführung 25 in die untere Anschlagstellung bewegt (von Fig. 10 nach 11). Dabei wird über das gleichzeitig mitbewegte Kabel 47 des Bowdenzugs 48 die erste Schloßeinheit 32 betätigt, deren Betätigungsarm 45 und Riegelhaken 44 in die Offenstellung verschwenkt wird (Bewegung von Fig. 6 über die Zwischenstellung der Fig. 8 nach Fig. 7). Die anfängliche Expansionsbewegung der Kolben-Zylinder-Einheit 23 erfolgt zwangsläufig in dieser Weise durch Verlagerung des Gehäuses 50 bei Stillstand der Kolbenstange 51 und des Schwenkhebels 19, da das Gewicht des Verdeckkastendeckels 1 und des Rahmens 6 über die Verbindungsstange 16 als Gegenkraft auf den Schwenkhebel 19 wirkt.

Beim Entriegeln der ersten Schloßeinheit 32 schwenkt der Betätigungsstift 42 des Riegelhakens 44 den Schloßhaken 36 der zweiten Schloßeinheit 35 in seine Schließstellung, in der er den Zapfen 39 der Konsole 3 verriegelt hält und gleichzeitig durch die Kraft der Drehfeder 38 gehalten wird (Fig. 3). Der Betätigungsstift 42 ist nun in einer Stellung außer Eingriff von der Schlitzführung 41, so dass der Rahmen 6 und insbesondere dessen Vorderende 33 angehoben werden kann (Bewegung von Fig. 3 nach Fig. 4). Der Schloßhaken 36 ist derart geformt und seine Schwenkachse 37 ist derart bezüglich des Zapfens 39 angeordnet, dass die Wirklinie der Öffnungskraft des Verdeckkastendeckels 1 am Zapfen 39 im wesentlichen durch die Schwenkachse 37 des Schloßhakens 36 verläuft.

Das Anheben des Rahmens 6 und damit des Verdeckkastendeckels 1 erfolgt mittels der weiterhin betätigten Kolben-Zylinder-Einheit 23, die nun mit ihrem Unterende bzw. dem Lagerstift 24 am unteren Ende der Langlochführung 25 abgestützt ist und demgemäß durch Expansion der Kolbenstange 51 den Schwenkhebel 19 verschwenkt, wodurch über die Kopplung der Verbindungsstange 16 mit dem Hauptlenker 7 der Rahmen 6 in die angehobene Offenstellung verschwenkt wird (über die Stellung der Fig. 4 in die Stellung der Fig. 12). Beim Verschwenken des Schwenkhebels 19 in seine Endstellung wird über den Steuerlenker 29 die Drehfalle 27 in ihre Sperrstellung verschwenkt (siehe Fig. 12), in der sie den Lagerstift 24 und damit das Unterende bzw. das Gehäuse 50 der Kolben-Zylinder-Einheit 23 in der unteren Endstellung verriegelt hält. Damit wird eine unerwünschte Bewegung der gesamten der Kolben-Zylinder-Einheit 23 entlang der Langlochführung 25 verhindert.

Bei angehobenem Rahmen 6 und mit dem Rahmen 6 angehobenem Verdeckkastendeckel 1 kann das Dach in bekannter Weise in den Verdeckkasten oder Dachablageraum bewegt und, zum Schließen des Daches, auch wieder herausbewegt werden.

Das Schließen des Verdeckkastendeckels 1 bzw. des Rahmens 6 erfolgt in entgegengesetztem Bewegungsablauf durch Einfahren der Kolbenstange 51 der Kolben-Zylinder-Einheit 23 aus der Stellung gemäß Fig. 12, wobei zunächst die Drehfalle 27 in ihrer Riegelstellung bleibt und den Lagerstift 24 und damit das Gehäuse 50 der Kolben-Zylinder-Einheit 23 in der unteren Stellung hält, so dass ein definierter Bewegungsablauf auch beim Schließen des Daches bzw. des Verdeckkastendeckels 1 und des Rahmens 6 gewährleistet ist.

Wenn der Rahmen 6 mit seinem Vorderende 33 in seine Schließstellung auf der Lagereinheit 34 bewegt ist und mit einer Zentriernase 52 in einer Zentrieraufnahme 53 der Lagereinheit 34 aufgenommen ist, hat auch die Drehfalle 27 über die Ansteuerung des Steuerlenkers 29 ihre Offenstellung eingenommen, so dass die weitere Betätigung bzw. Verkürzung der Kolben-Zylinder-Einheit 23 auf dem letzten Verstellweg dazu führt, dass sich das Unterende des Gehäuses 50 bzw. der Lagerstift 24 an der Langlochführung 25 nach oben in die entgegengesetzte Endstellung bewegt. Dabei wird über das Kabel 47 des Bowdenzugs 48 der Riegelhaken 44 der ersten Schloßeinheit 32 betätigt, der beim Verschwenken in seine Schließstellung den Riegelzapfen 49 greift und damit die Trägereinrichtung bzw. den Rahmen 6 nach unten in eine feste Riegelverbindung an der Karosserie zieht.

Der Bowdenzug 48 als Teil der Betätigungseinrichtung kann weitgehend flexibel an die baulichen Gegebenheiten im Heckbereich der Karosserie angepasst werden. Jedoch können auch andere Mittel wie z. B. Gestänge zur Übertragung der Betätigungsbewegung verwendet werden.

Der Verdeckkastendeckel 1 kann durch eine.jeweilige Gasdruckfeder 54 gegenüber dem Rahmen 6 abgestützt sein, so dass er beim manuellen Verschwenken in seiner Funktion als Kofferraumdeckel gewichtsentlastet ist.

**Bezugszeichenliste**

| | | | |
|---|---|---|---|
| 1 | Verdeckkastendeckel | 28 | Achse |
| 2 | Halterung | 29 | Steuerlenker |
| 3 | Konsole | 30 | Gelenk |
| 4 | Lenker | 31 | Gelenk |
| 5 | Lenker | 32 | erste Schloßeinheit |
| 6 | Rahmen | 33 | Vorderende |
| 7 | Hauptlenker | 34 | Lagereinheit |
| 8 | Hilfslenker | 35 | zweite Schloßeinheit |
| 9 | Gelenk | 36 | Schloßhaken |
| 10 | Gelenk | 37 | Querachse |
| 11 | Gelenk | 38 | Drehfeder |
| 12 | Gelenk | 39 | Zapfen |
| 13 | Lagerplatte | 40 | Betätigungsarm |
| 14 | Verlängerung | 41 | Schlitzführung |
| 15 | Gelenk | 42 | Betätigungsstift |
| 16 | Verbindungsstange | 43 | Achse |
| 17 | Gelenk | 44 | Riegelhaken |
| 18 | Arm | 45 | Betätigungsarm |
| 19 | Schwenkhebel | 46 | Langloch |
| 20 | Schwenkachse | 47 | Kabel |
| 21 | zweiter Arm | 48 | Bowdenzug |
| 22 | Anlenkpunkt | 49 | Riegelzapfen |
| 23 | Kolben-Zylinder-Einheit | 50 | Gehäuse |
| 24 | Lagerstift | 51 | Kolbenstange |
| 25 | Langlochführung | 52 | Zentriernase |
| 26 | Stützplatte | 53 | Zentrieraufnahme |
| 27 | Drehfalle | 54 | Gasdruckfeder |

## Patentansprüche

1. Verriegelungsvorrichtung zum Festlegen einer an der Karosserie mittels einer Antriebseinrichtung bewegbar gelagerten Trägereinrichtung eines Verdeckkastendeckels eines Cabriolets,
**gekennzeichnet durch**
eine karosserieseitig gelagerte erste Schloßeinheit (32) zum lösbaren Verriegeln der Trägereinrichtung (6) an der Karosserie (34),
eine an der Trägereinrichtung (6) gelagerte zweite Schloßeinheit (35) zum lösbaren Verriegeln des an der Trägereinrichtung (6) bewegbar gelagerten Verdeckkastendeckels (1) an der Trägereinrichtung (6) und
eine Betätigungseinrichtung (42, 48) für die Betätigung der beiden Schloßeinheiten (32, 35).

2. Verriegelungsvorrichtung nach Anspruch 1,
**dadurch gekennzeichnet, dass** die Betätigungseinrichtung (42, 48) mit der Antriebseinrichtung (23) verbunden ist.

3. Verriegelungsvorrichtung nach Anspruch 1 oder 2,
**dadurch gekennzeichnet, dass** die beiden Schloßeinheiten (32, 35) zueinander benachbart angeordnet sind.

4. Verriegelungsvorrichtung nach einem der Ansprüche 1 bis 3,
**dadurch gekennzeichnet, dass** die erste Schloßeinheit (32) beim Betätigen der zweiten Schloßeinheit (35) mit dieser in einem lösbaren Koppeleingriff verbunden ist.

5. Verriegelungsvorrichtung nach einem der Ansprüche 1 bis 4,
**dadurch gekennzeichnet, dass** ein Riegelhaken (44) der ersten Schloßeinheit (32) und ein Schloßhaken (36) der zweiten Schloßeinheit (35) über Eingriffselemente miteinander koppelbar sind.

6. Verriegelungsvorrichtung nach Anspruch 5,
**dadurch gekennzeichnet, dass** ein Betätigungsstift (42) und eine den Betätigungsstift (42) aufnehmende Schlitzführung (41) die Eingriffselemente bilden.

7. Verriegelungsvorrichtung nach einem der Ansprüche 1 bis 6,
**dadurch gekennzeichnet, dass** die Trägereinrichtung (6) in einer Schließstellung mittels der ersten Schloßeinheit (32) an der Karosserie (34) verriegelt gehalten ist, wobei die zweite Schloßeinheit (35) den Verdeckkastendeckel (1) von der Trägereinrichtung (6) entriegelt hat.

8. Verriegelungsvorrichtung nach einem der Ansprüche 1 bis 7,
**dadurch gekennzeichnet, dass** die insbesondere als Bowdenzug (47, 48) gebildete Betätigungseinrichtung (42, 48) mit einem Riegelhaken (44) der ersten Schloßeinheit (32) verbunden ist.

9. Verriegelungsvorrichtung nach einem der Ansprüche 1 bis 8,
**dadurch gekennzeichnet, dass** ein Schloßhaken (36) der zweiten Schloßeinheit (35) mittels einer Vorspanneinrichtung (38) in seine Schließstellung vorgespannt ist, in der er den Verdeckkastendeckel (1) oder ein Lagerteil (3) des Verdeckkastendeckels (1) an der Trägereinrichtung (6) verriegelt hält.

10. Verriegelungsvorrichtung nach einem der Ansprüche 1 bis 9,
**dadurch gekennzeichnet, dass** der Verdeckkastendeckel (1) mittels einer Halterung (2) an einer Konsole (3) angebracht ist, die mittels einer Lenkereinrichtung (4, 5) an der Trägereinrichtung (6) bewegbar gelagert ist.

11. Verriegelungsvorrichtung nach einem der Ansprüche 1 bis 10,
**dadurch gekennzeichnet, daß** die Antriebseinrichtung (23) an ihrem mit der Betätigungseinrichtung (47, 48) gekoppelten Ende entlang einer Führung (25) verschiebbar geführt und mittels einer Sperreinrichtung (27, 29) in einer Endstellung verriegelbar ist, in der die erste Schloßeinheit (32) entriegelt ist.

12. Verriegelungsvorrichtung nach einem der Ansprüche 1 bis 11,
**dadurch gekennzeichnet, daß** die Sperreinrichtung (27, 29) von einem von der Antriebseinrichtung (23) bewegbaren Hebel (19) zum Antreiben der Trägereinrichtung (6) betätigt ist.

13. Verriegelungsvorrichtung nach einem der Ansprüche 1 bis 12,
**dadurch gekennzeichnet, daß** die Trägereinrichtung (6) mittels eines Hauptlenkers (7), insbesondere in Viergelenkanordnung, fahrzeugseitig abgestützt ist.

14. Verriegelungsvorrichtung nach einem der Ansprüche 1 bis 13,
**dadurch gekennzeichnet, daß** die Trägereinrichtung (6) in Schließstellung mittels einer Zentrieraufnahme fahrzeugfest abgestützt ist.

15. Verriegelungsvorrichtung nach einem der Ansprüche 1 bis 14,
**dadurch gekennzeichnet, daß** die Trägereinrichtung ein Rahmen (6) ist, der über eine Gelenkeinrichtung, insbesondere ein Vier- oder Mehrgelenk (7 und 8), an der Karosserie bewegbar abgestützt ist und an dem der Verdeckkastendeckel (1) schwenkbar gelagert ist.

16. Verriegelungsvorrichtung nach einem der Ansprüche 1 bis 15,
**dadurch gekennzeichnet, daß** die Antriebseinheit eine lineare Verstelleinheit und insbesondere eine hydraulische Kolben-Zylinder-Einheit (23) ist.

## Claims

1. Locking mechanism for securing a support device of a folding top compartment cover of a convertible, which support device is mounted movably on the vehicle body by means of a driving device,
**characterized by**
a first lock unit (32), which is mounted on the vehicle body, for releasably locking the support device (6) to the vehicle body (34),
a second lock unit (35), which is mounted on the support device (6), for releasably locking the folding top compartment cover (1), which is mounted movably on the support device (6), to the support device (6), and an actuating device (42, 48) for actuating the two lock units (32, 35).

2. Locking mechanism according to Claim 1,
**characterized in that** the actuating device (42, 48) is connected to the driving device (23).

3. Locking mechanism according to Claim 1 or 2,
**characterized in that** the two lock units (32, 35) are arranged adjacent to each other.

4. Locking mechanism according to one of Claims 1 to 3,
**characterized in that**, when the second lock unit (35) is actuated, the first lock unit (32) is connected thereto in a releasable coupling engagement.

5. Locking mechanism according to one of Claims 1 to 4,
**characterized in that** a latching hook (44) of the first lock unit (32) and a lock hook (36) of the second lock unit (35) can be coupled to each other via engagement elements.

6. Locking mechanism according to Claim 5,
**characterized in that** an actuating pin (42) and a slotted guide (41) which receives the actuating pin (42) form the engagement elements.

7. Locking mechanism according to one of Claims 1 to 6,
**characterized in that**, in a closed position, the support device (6) is kept locked to the vehicle body (34) by means of the first lock unit (32), with the second lock unit (35) having released the folding top compartment cover (1) from the support device (6).

8. Locking mechanism according to one of Claims 1 to 7,
**characterized in that** the actuating device (42, 48), which is formed in particular as a Bowden cable (47, 48), is connected to a latching hook (44) of the first lock unit (32).

9. Locking mechanism according to one of Claims 1 to 8,
**characterized in that** a lock hook (36) of the second lock unit (35) is prestressed by means of a prestressing device (38) into its closed position in which it keeps the folding top compartment cover (1) or a bearing part (3) of the folding top compartment cover (1) locked to the support device (6).

10. Locking mechanism according to one of Claims 1 to 9,
**characterized in that** the folding top compartment cover (1) is attached by means of a mount (2) to a bracket (3) which is mounted movably on the support device (6) by means of a link device (4, 5).

11. Locking mechanism according to one of Claims 1 to 10,
**characterized in that** the driving device (23) is guided displaceably at its end coupled to the actuating device (47, 48) along a guide (25) and can be locked by means of a retaining device (27, 29) in an end position in which the first lock unit (32) is unlocked.

12. Locking mechanism according to one of Claims 1 to 11,
**characterized in that** the retaining device (27, 29) can be actuated by a lever (19), which is movable by the driving device (23), for driving the support device (6).

13. Locking mechanism according to one of Claims 1 to 12,
**characterized in that** the support device (6) is supported on the vehicle by means of a main link (7), in particular in a four-bar linkage arrangement.

14. Locking mechanism according to one of Claims 1 to 13,
**characterized in that**, in the closed position, the support device (6) is supported in a manner mounted on the vehicle by means of a centering receptacle.

15. Locking mechanism according to one of Claims 1 to 14,
**characterized in that** the support device is a frame (6) which is supported movably on the vehicle body via an articulated device, in particular a four- or multi-bar linkage mechanism (7 and 8), and the folding top compartment cover (1) is mounted pivotably on said frame.

16. Locking mechanism according to one of Claims 1 to 15,
**characterized in that** the driving unit is a linear adjustment unit and, in particular, is a hydraulic piston/cylinder unit (23).

## Revendications

1. Dispositif de verrouillage pour la fixation d'un dispositif de support, monté de façon déplaçable sur la carrosserie au moyen d'un dispositif d'entraînement, d'un couvercle de logement de capote d'un cabriolet, **caractérisé par**
une première unité de serrure (32) montée du côté carrosserie pour le verrouillage détachable du dispositif de support (6) à la carrosserie (34),
une deuxième unité de serrure (35) montée sur le dispositif de support (6), pour le verrouillage détachable du couvercle de logement de capote (1) monté de façon déplaçable sur le dispositif de support (6) au dispositif de support (6) et
un dispositif d'actionnement (42, 48) pour l'actionnement des deux unités de serrure (32, 35).

2. Dispositif de verrouillage selon la revendication 1, **caractérisé en ce que** le dispositif d'actionnement (42, 48) est relié au dispositif d'entraînement (23).

3. Dispositif de verrouillage selon la revendication 1 ou 2, **caractérisé en ce que** les deux unités de serrure (32, 35) sont disposées à proximité l'une de l'autre.

4. Dispositif de verrouillage selon l'une quelconque des revendications 1 à 3, **caractérisé en ce que**, lors de l'actionnement de la deuxième unité de serrure (35), la première unité de serrure (32) est reliée à celle-ci en une prise de couplage séparable.

5. Dispositif de verrouillage selon l'une quelconque des revendications 1 à 4, **caractérisé en ce qu'**un crochet de verrou (44) de la première unité de serrure (32) et un crochet de serrure (36) de la deuxième unité de serrure (35) peuvent être couplés l'un à l'autre par des éléments d'engagement.

6. Dispositif de verrouillage selon la revendication 5, **caractérisé en ce qu'**une tige d'actionnement (42) et une fente de guidage (41) contenant la tige d'actionnement (42) forment les éléments d'engagement.

7. Dispositif de verrouillage selon l'une quelconque des revendications 1 à 6, **caractérisé en ce que** le dispositif de support (6) est maintenu dans une position fermée verrouillé à la carrosserie (34) au moyen de la première unité de serrure (32), dans lequel la deuxième unité de serrure (35) a déverrouillé le couvercle de logement de capote (1) du dispositif de support (6).

8. Dispositif de verrouillage selon l'une quelconque des revendications 1 à 7, **caractérisé en ce que** le dispositif d'actionnement (42, 48) formé en particulier comme câble Bowden (47, 48) est relié à un crochet de verrou (44) de la première unité de serrure (32).

9. Dispositif de verrouillage selon l'une quelconque des revendications 1 à 8, **caractérisé en ce qu'**un crochet de serrure (36) de la deuxième unité de serrure (35) est précontraint dans sa position fermée au moyen d'un dispositif de précontrainte (38), dans laquelle il maintient verrouillé sur le dispositif de support (6) le couvercle de logement de capote (1) ou une partie d'appui (3) du couvercle de logement de capote (1).

10. Dispositif de verrouillage selon l'une quelconque des revendications 1 à 9, **caractérisé en ce que** le couvercle de logement de capote (1) est disposé au moyen d'un support (2) sur une console (3), qui est monté de façon déplaçable sur le dispositif de support (6) au moyen d'un dispositif de bielles (4, 5).

11. Dispositif de verrouillage selon l'une quelconque des revendications 1 à 10, **caractérisé en ce que** le dispositif d'entraînement (23) est guidé de façon coulissante le long d'un guidage (25) à son extrémité couplée au dispositif d'actionnement (47, 48), et il peut être verrouillé au moyen d'un dispositif d'arrêt (27, 29) dans une position terminale, dans laquelle la première unité de serrure (32) est déverrouillée.

12. Dispositif de verrouillage selon l'une quelconque des revendications 1 à 11, **caractérisé en ce que** le dispositif d'arrêt (27, 29) est actionné par un levier (19) déplaçable au moyen du dispositif d'entraînement (23) pour l'entraînement du dispositif de support (6).

13. Dispositif de verrouillage selon l'une quelconque des revendications 1 à 12, **caractérisé en ce que** le dispositif de support (6) est soutenu au moyen d'une bielle principale (7), en particulier un agencement à parallélogramme articulé.

14. Dispositif de verrouillage selon l'une quelconque des revendications 1 à 13, **caractérisé en ce que** le dispositif de support (6) est soutenu en position fermée de façon solidaire du véhicule au moyen d'un logement central.

15. Dispositif de verrouillage selon l'une quelconque des revendications 1 à 14, **caractérisé en ce que** le dispositif de support est un cadre (6), qui est soutenu de façon mobile sur la carrosserie au moyen d'un dispositif articulé, en particulier un parallélogramme ou un polygone articulé (7 et 8) et il est monté de façon pivotante sur le couvercle de logement de capote (1).

16. Dispositif de verrouillage selon l'une quelconque des revendications 1 à 15, **caractérisé en ce que** l'unité d'entraînement est une unité de déplacement linéaire et en particulier une unité à piston-cylindre (23).
